# EUROPEAN PATENT SPECIFICATION

(11) **EP 3 483 024 B1**
(45) Date of publication and mention of the grant of the patent: **08.04.2020**
(21) Application number: 17306565.7
(22) Date of filing: 10.11.2017
(51) Int. Cl.: B60W 50/08, B60W 30/02

(54) **VEHICLE AND CORRESPONDING USE**
FAHRZEUG UND ENTSPRECHENDE VERWENDUNG
VÉHICULE ET UTILISATION CORRESPONDANTE

(43) Date of publication of application: 15.05.2019
(73) Proprietor: Exel Industries, 51200 Epernay (FR)
(72) Inventor: FUCHS, Bernhard, 93047 REGENSBURG (DE)
(74) Representative: Lavoix

(56) References cited:
- WO-A1-2013/025910
- US-A1- 2008 280 719
- US-A1- 2013 013 158
- US-A1- 2014 039 772
- US-A1- 2017 313 318

## Description

The present invention concerns a vehicle comprising a vehicle frame, front wheels, and rear wheels.

Agricultural vehicles used for distributing fertilizing agents are known in the state of the art.

US2008/280719 discloses a drive arrangement for vehicles. US2013/013158 discloses a control arrangement for vehicles.

Distributing fertilizing agents, in particular fertilizing agents containing nitrogen, can lead to loss of nitrogen into the environment when done during periods in which the vegetation does not need any nitrogen. In order to limit the environmental impact of fertilizing agent in the future it will be necessary to distribute the fertilizing agents only during specific periods and in particular during periods in which the nitrogen need of the plants is relatively high, which is generally during spring time.

Distributing the nitrogen fertilizers, in particular during these periods, has however the following constraints.

The soil is often saturated with water. The weather is not stable, which leads to short distribution windows.

Another problem is the possibility of loss of ammonium into the air in case the distribution technology is not adapted to the needs.

Another problem generated by fertilizer distribution, in particular during spring time, in the Grass land and in standing crop is the danger of damages to the plants or crop or damages to the soil structure, as well as lateral skidding of the vehicle when driving along lateral inclinations (i.e. perpendicular or transversally to a slope). The problem of skidding appears predominantly when the crop are in rows and/or when the soil comprises wheel tracks (i.e. portions of soil in which previously wheels have run and which have generally little vegetation).

Due to the above-mentioned constraints, the distribution of fertilizer and in particular of liquid manure leads to a high impact and stress to the drivers as they need to work in shifts and often during night time. The drivers also need more and more to check and monitor an important number of parameters, such as for example data of fertilizing agent sensors.

A need exists therefore for vehicles and in particular agricultural vehicles which are able to being displaced with little impact on the vegetation and/or with high directional stability and/or requiring little attention of the driver.

In order to solve one or more of these problems, the invention provides a vehicle and in particular a vehicle having the following features:
- front drive means for driving the front wheels with a front nominal speed,
- rear drive means for driving the rear wheels with a rear nominal speed, and
- control means adapted and configured for selectively controlling the front drive means and the rear drive means so that
either the front nominal speed (V_{FR}, V_{FL}) is different from the rear nominal speed (V_{RR}, V_{RL}), in particular so that the front nominal speed is greater or smaller than the rear nominal speed,
or so that the front nominal speed is equal to the rear nominal speed,
the difference between the front nominal speed and the rear nominal speed being defined as "lead",
- the vehicle comprises lateral inclination information means, in particular a lateral inclination sensor, adapted to and configured for indicating the lateral inclination of the vehicle frame or of the soil on which the vehicle is placed with respect to a horizontal plane, the lateral inclination information means being connected to the control means;
- the control means are adapted to and configured for controlling, in particular selectively controlling, the front drive means and the rear drive means according to one of the two following terrain modes:
   - horizontal plane terrain mode, executed when the lateral inclination information means indicate a horizontal position of the vehicle or a position of the vehicle parallel to a slope, and
   - lateral inclination terrain mode, executed when the lateral inclination information means indicate a lateral inclination of the vehicle with respect to a horizontal plane;
- the control means are adapted to and configured for controlling the lead as a function of the lateral inclination information.

The vehicle according to the invention can also comprise generally a vehicle frame, front wheels, and rear wheels.

The vehicle according to the invention can comprise one or more of the following features, taken in every technically feasible combination:
- the vehicle comprises drive mode control means defining one or more of the following drive modes:
   A) a neutral drive mode in which the front nominal speed is set equal to the rear nominal speed
   B) a small lead drive mode in which the front nominal speed is higher than the rear nominal speed , in particular in a range from 0% to 3%
   C) a high lead drive mode in which the front nominal speed is higher than the rear nominal speed and the difference in front nominal speed to the rear nominal speed is higher than in the small lead drive mode, in particular the difference being in a range from from 2 to 5%;
- the control means comprise a vegetation selector adapted to and configured for switching the control means into one of the vegetation modes, indicating the vegetation type on which the vehicle is displaced:
   Grassland mode - The terrain comprises one or more of the following: grassland, standing plants, stubble, intermediate crops, and
   Row crop mode - The terrain comprises row crops or the terrain comprises wheel tracks,
- the control means are adapted and configured for controlling the vehicle according to one, several or all of the following drive strategies:
   DRIVE STRATEGY 1: Vegetation mode=Grassland mode and Terrain mode= horizontal plane terrain mode: the vehicle is driven in neutral drive mode;
   DRIVE STRATEGY 2: Vegetation mode=Grassland mode and Terrain mode=lateral inclination terrain mode: the vehicle is driven in small lead drive mode;
   DRIVE STRATEGY 3: Vegetation mode=Row crop mode and Terrain mode= horizontal plane terrain mode: the vehicle is driven in neutral drive mode; and
   DRIVE STRATEGY 4: Vegetation selector= Row crop mode and Terrain mode= lateral inclination terrain mode: the vehicle is driven in high lead drive mode;
- at least one of the front wheels, in particular each front wheel, comprises a front tire having a front air chamber, and/or at least one of the rear wheels, in particular each rear wheel, comprises a rear tire having a rear air chamber,
   the vehicle comprises furthermore a pressure control device adapted to and configured for controlling the fluid pressure, in particular air pressure, in at least one of the front and/or rear air chambers, and in particular in each of the air chambers.
- in DRIVE STRATEGY 1 a first, namely a relatively small, air chamber pressure is set, and preferably the air chamber pressure is set to be identical in each air chamber;
   in DRIVE STRATEGY 2 the air chamber pressure is adjusted as a function of the lateral inclination so that a lower ground wheel has an air pressure higher than the corresponding higher ground wheel;
   in DRIVE STRATEGY 3 the air pressure is adjusted as a function of a needed traction force; and
   in DRIVE STRATEGY 4 the air chamber pressure is adjusted as a function of the lateral inclination so that a lower ground wheel has an air pressure higher than the corresponding higher ground wheel;
- the control means are adapted and configured for controlling the vehicle according to one, several or all of the following supplementary strategies, which are applied in addition and preferably simultaneously to each of the DRIVE STRATEGIES 1 to 4:
   DRIVE STRATEGY 5 - Turn mode: Supplementary to the selected drive strategy among DRIVE STRATEGY 1 to 4: the lead is increased with respect to the applied DRIVE STRATEGY 1 to 4, in particular the lead is increased at least by 1% point increase;
   DRIVE STRATEGY 6 - Reverse drive: With respect to the applied DRIVE STRATEGY 1 to 4, additionally the front nominal speed is applied to the rear wheels with a reverse rotation direction and the rear nominal speed is applied to the front nominal speed with a reverse direction;
   DRIVE STRATEGY 7 - Road travel: the neutral drive mode is set and the air chamber pressure is set to being higher than during the DRIVE STRATEGY 1 to 4, in particular the air chamber pressure is at least 0,1 bar and in particular 0,4 bar higher than during DRIVE STRATEGIES 1 to 4;
- the control means are adapted to control the front drive means and the rear drive means so that the maximum difference between the front nominal speed and the rear nominal speed is greater than 1%, preferably greater or equal than 2% and more preferably between 2 and 4%;
- the control means are adapted to control the front drive means independently from the rear drive means, namely the front nominal speed can be set from zero to a maximum front nominal speed and the rear nominal speed can be set from zero to a maximum rear nominal speed independently from the front nominal speed;
- the front drive means comprise a front motor, in particular a hydraulic motor or an electric motor, adapted to drive the front wheels and wherein the rear drive means comprise a rear motor, in particular a hydraulic motor or an electric motor, adapted to drive the rear wheels;
- the vehicle comprises a main motor, in particular a combustion engine, and transmission means adapted to and configured for transmitting energy from the main motor to the front drive means and to the rear drive means, in particular the transmission means comprising a distribution transmission and more particularly a pump transfer gear;
- the vehicle comprises a distribution device for distributing a substance to an agricultural field, in particular for distributing liquid and/or powder to an agricultural field and wherein
the distribution device comprises a tank for containing the substance and a distribution unit connected to the tank and/or
- at least one of the tires, and in particular all the tires, is/are tire(s) having a nominal minimum pressure of equal or below 1,5 bar, in particular equal to or below 1,3 bar and more preferably of: equal to or below 1,2 bar, 1,1 bar, 0,9 bar or 0,8 bar and/or
at least one of the tires, and in particular all the tires, having a fluid pressure in the air chamber of smaller than 1,3 bars but higher than 1,1 bars or higher than 0,7 bars.

The invention relates also to a use of a vehicle having the following features:
- Use of a vehicle characterized in that the vehicle is a vehicle as defined above.
- Use of a vehicle as defined above and further comprising detecting the vegetation on which the vehicle is to be displaced, setting the vegetation mode for the vehicle according the vegetation and executing at least one of the DRIVE STRATEGIES 1 to 4, as a function of the vegetation and of the terrain.

The features disclosed with respect of the invention can be used in every technical possible manner, isolated or in any technically possible combination. Features disclosed together should not be inferred as being exclusively being able to be used together.

Features disclosed as functional features relating to structural features of the device should be regarded also as being disclosed as the corresponding action or method step, in particular during use of the vehicle.

The invention will be better understood in light of the following description, given only for illustration purposes and referring to the annexed drawings, on which:
- figure 1 is a schematic side view of a vehicle according to the invention;

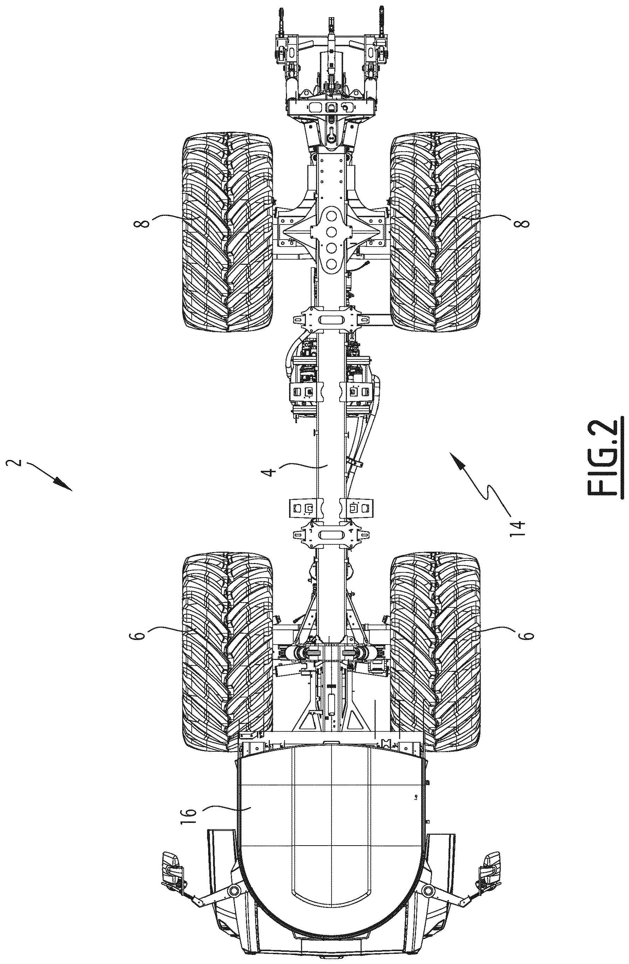

- figure 2 is a schematic top view of the vehicle of figure 1;

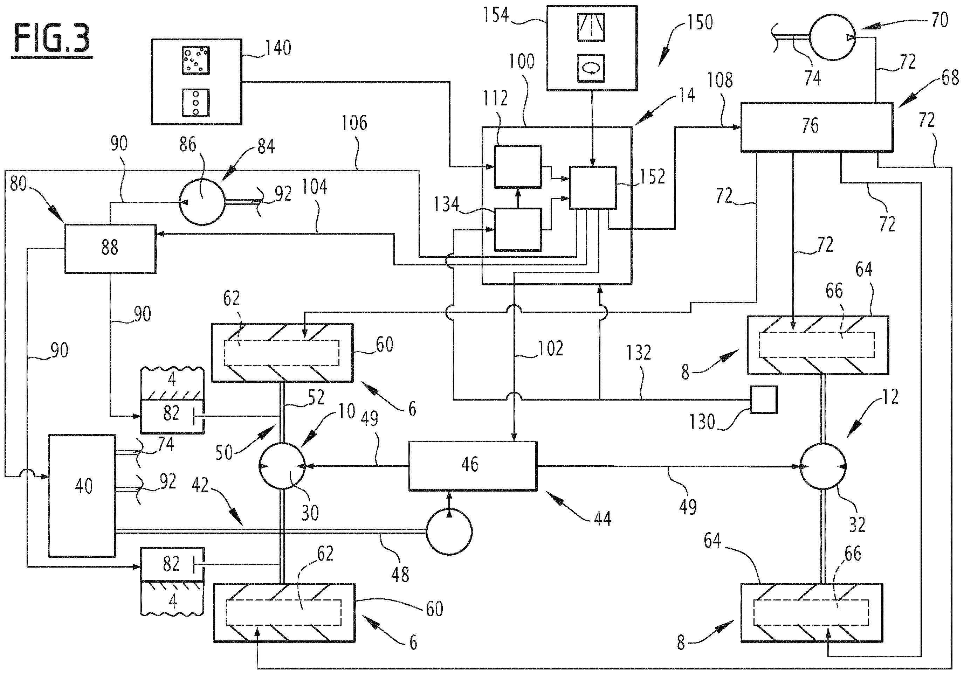

- figure 3 is a schematic block diagram of the vehicle of figures 1 and 2 showing the functional features of the vehicle.
- Figure 4 is a schematic view of the wheels and axles of the vehicle during a first drive strategy and
- figures 5 and 6 are schematic views during second and third drive strategies.

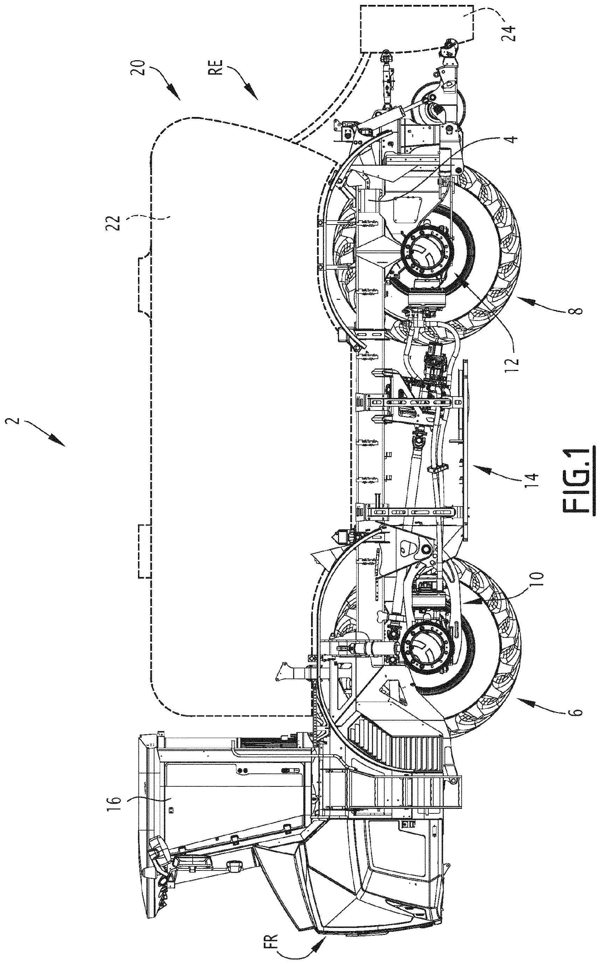

Figure 1 shows a vehicle according to the invention designated by the general reference 2. The vehicle 2 is for example an agricultural vehicle adapted to distribute liquid manure to an agricultural field.

The vehicle 2 comprises a vehicle frame 4, front wheels 6 and rear wheels 8. The front wheels 6 comprise one left front wheel and one right front wheel. The rear wheels 8 comprise one left rear wheel and one right rear wheel, taken in the forward displacement direction F of the vehicle. The left front and left rear wheels are omitted on figure 1 for illustration purposes. Generally, the front wheels 6 comprise at least one front wheel and the rear wheels 8 comprise at least one rear wheel.

The vehicle 2 comprises furthermore front drive means 10 for driving the front wheels with a front nominal speed and rear drive means 12 for driving the rear wheels with a rear nominal speed. The vehicle comprises control means 14 adapted and configured for selectively controlling the front drive means 10 and the rear drive means 12 so that either the front nominal speed is different from the rear nominal speed or so that the front nominal speed is equal to the rear nominal speed. This means that the control means 14 are adapted and configured to, at any given instant during driving, controlling the front drive means 10 and the rear drive means 12 so that either the front nominal speed is different from the rear nominal speed or so that the front nominal speed is equal to the rear nominal speed. The control means 14 are thus adapted to switch between or select these two driving possibilities.

The difference between the front nominal speed and the rear nominal speed is defined as "lead". The control means 14 are in particular adapted to control the front drive means 10 and the rear drive means 12 so that the front nominal speed is greater or smaller than the rear nominal speed. Generally and during forward driving, the front nominal speed is equal or greater than the rear nominal speed.

The front nominal speed is defined as the circumferential speed of the front wheels 6 when driven with a predetermined and nominal rotational speed. Likewise, the rear nominal speed is the circumferential speed of the rear wheels 8 at a nominal diameter and when driven with a nominal rotational speed. Generally, the front wheels 6 and rear wheels 8 have identical diameter, but the front wheels 6 can have a diameter different from the rear wheels 8. The wheel circumferential speed of the front wheels 6 and of the rear wheels 8 can be different from the front nominal speed respectively the rear nominal speed, due to wear of the wheels or due to a difference in air pressure, as will be explained later on.

The control means 14 are adapted to control the front drive means 10 and the rear drive means 12 so that the maximum difference between the front nominal speed and the rear nominal speed may be equal or greater than 4% and can for example be in the range from 5% to 7%. The lead itself is generally set between 0% and 5%, preferably between 2% and 4%. In other terms, when the lead in for example 4% and the rear wheels 8 are driven with a rotational speed corresponding to a determined rear nominal speed n, the front drive means 10 are controlled so that the front nominal speed is 1,04 times n.

More particularly, the control means 14 are adapted to control the front drive means 10 independently from the rear drive means 12 so that the front nominal speed can be set from zero to a maximum front nominal speed and the rear nominal speed can be set from zero to a maximum rear nominal speed independently from the front nominal speed.

The vehicle 2 comprises a front F and a rear R as well as an operator cabin 16 fixed to the vehicle frame 4. The vehicle 2 comprises a distribution device 20 adapted to distribute a substance to an agricultural field, in particular for distributing liquid, like liquid fertilising agents, such as liquid manure, and/or powder to an agricultural field. The distribution device 20 comprises a tank 22 for containing the substance and a distribution unit 24 connected to the tank. Alternatively, the vehicle 2 comprises instead of a distribution device 20 another agricultural equipment or tool (not represented), such as a plough or a cultivator, for example as a tiller.

The front drive means 10 comprise a front motor 30 which is in the given instance a hydraulic motor and is adapted to drive the front wheels 6. The rear drive means 12 comprise a rear motor 32 which is in the example a hydraulic motor and which is adapted to drive the rear wheels 8. The front motor 30 and the rear motors are individual motors. The front motor 30 may be a common motor for all the front wheels 6, and the rear motor 32 may be a common motor for all the rear wheels 8. Alternatively and not represented the front motor 30 or the rear motor 32 or both can be electrical motors. In this case, the electrical motors are independently driveable or driven one from another

The vehicle comprises also a main motor 40, in particular a combustion engine, and transmission means 42 adapted to and configured for transmitting energy from the main motor 40 to the front drive means 10 and to the rear drive means 12, in particular the transmission means 42 comprising a distribution transmission 44 and more particularly a pump transfer gear 46. The distribution transmission 44 is for example driven by an output shaft 48 of the main motor 40. The distribution transmission 44 has an output which is connected by a transmission line 49 to the front motor 30 and another output which is connected by a transmission line 49 to the rear motor 32. The transmission lines are in the present case hydraulic lines.

The vehicle comprises an adjustable link 50 adjustably linking the front wheels 6 so that the position of the front wheels 6 is adjustable with respect to the position of the rear wheels 8 and with respect to the vehicle frame 4. The adjustable link 50 comprises in particular a mobile axle 52 mobile with respect to the vehicle frame 4, or a single suspension of each front wheel 6 on the vehicle frame. Alternatively, the rear wheels 8 are linked to the vehicle frame 4 in an adjustable manner via the adjustable link 50. In this case the features which are disclosed with respect to the adjustable link at the front wheels apply in an analogous manner to the rear wheels.

Furthermore, at least one of the front wheels 6, in particular each front wheel 6, comprises a front tire 60 having a front air chamber 62, and/or at least one of the rear wheels 8, in particular each rear wheel 8, comprises a rear tire 64 having a rear air chamber 66. The vehicle comprises furthermore a pressure control device 68 adapted to and configured for controlling the fluid pressure, namely the air pressure, in at least one of the front air chambers 62 and/or rear air chambers 66 and preferably in each of the air chambers.

To this end, the pressure control device 68 comprises a pressurized fluid source 70, such as an air compressor preferably driven by the main motor 40 over a shaft 74. The pressure control device 68 comprises also a pressure line 72 for providing pressurized fluid from the fluid source 70 to one of each of the air chambers, i.e. the front air chambers 62 and the rear air chambers 66. The pressure control device 68 comprises also a distribution valve 76, inserted in pressure line 72 adapted to selectively and individually control pressurized fluid flow from the pressurized fluid source 70 to each of the air chambers 62, 66. The pressure control device can also comprise for each air chamber, a pressure sensor (not depicted) adapted and configured for detecting the fluid pressure in the respective air chamber. The pressure sensor(s) are used by the pressure control device for regulating the pressure in the air chambers.

At least one and in particular all the tires are tires which allow driving the vehicle while the nominal pressure in the air chamber of the respective tire is rather low. This allows for a large tread surface which reduces pressure on the soil and increases traction. The tires have preferably a nominal minimum pressure in the air chamber of equal to or below 1,5 bar, in particular of equal to or below 1,3 bar and more preferably of equal to or below 1,2 bar. The tires can be for examples tires sold under the trade name "Michelin VF 900/60 R38 Cerexbib 2". The tires may also have a nominal minimum pressure of equal to or below 1,1 bar, in particular of equal to or below 0,9 bar and in particular or equal to or below 0,8 bar.

The vehicle comprises a link control device 80 adapted and configured to adjust the adjustable link 50. The link control device 80 comprises two actuators 82, in the present case two combined suspension and gradient cylinders, each one fixed to the vehicle frame 4 and to one of the axles of the front wheels 6. The link control device 80 comprises actuator drive means 84, for example a hydraulic pump 86, a control valve 88 and a hydraulic line 90 from the hydraulic pump 86 via the control valve to the actuators 82, allowing selectively locking or releasing the gradient part of the cylinder.

The actuator drive means 84 are preferably driven by the main motor, in the present case driven by an output shaft 92 of the main motor 40.

The vehicle 2 comprises a control unit 100 that is adapted to and configured for controlling each of the components of the vehicle. The control unit 100 can be embodied as a computer including any combination of digital and analog computing means, such as processor, memory, input/output.

The vehicle 2 comprises a drive control line 102 linked to the front drive means 10 and to the rear drive means 12, in the present case linked to the pump transfer gear 46, a link control line 104 adapted to control the link control device 80, in the present case linked to the control valve 88, a main motor control line 106, linked to the main motor 40, a pressure control line 108, linked to the pressure control device 68, in the present case to the distribution valve 76. The control lines can be embodied by individual signal lines, or by a bus system, or by any other technical feasible control line means.

The vehicle 2 comprises drive mode control means 112, which can be embodied by the control unit 100, defining one or more of the following drive modes of the vehicle:
A) a neutral drive mode in which the front nominal speed is set equal to the rear nominal speed;
B) a small lead drive mode in which the front nominal speed is higher than the rear nominal speed, in particular the difference being in a range from 0% to 3%
C) a high lead drive mode in which the front nominal speed is higher than the rear nominal speed and the difference in front nominal speed to the rear nominal speed is higher than in the small lead drive mode, in particular the difference being in a range from 2 to 5%.

In particular, in the small lead drive mode, the speed difference range can be smaller than 2,5% and in the high lead drive mode, the speed difference can be greater than 2,5%. While the ranges of the small lead and high lead ranges overlap, for a given instance in one vehicle 2 of a small and a high lead drive mode, the small lead difference is smaller than the high lead difference.

To this end, the drive mode control means 112, is linked to the drive control line 102.

The vehicle 2 comprises lateral inclination information means 130, in particular a lateral inclination sensor, adapted to and configured for indicating the lateral inclination of the vehicle frame or of the soil on which the vehicle is placed with respect to a horizontal plane. The lateral inclination sensor is for example an accelerometer arranged on the rear axle of the vehicle. The lateral inclination means 130 can also comprise memory means representing a map and inclination information of the terrain and position and heading generating means, such as a GPS. The lateral inclination information means 130 is connected to the control means 14 or the control unit 100, more particularly to the drive mode control means 112, via a sensor line 132.

The vehicle 2 comprises terrain mode control means 134, embodied for example by a portion of the control unit 100, and are adapted to and configured for controlling the front drive means 10 and the rear drive means 12 according to one of the two following terrain modes:
- horizontal plane terrain mode, executed when the lateral inclination information means 130 indicate a horizontal position of the vehicle or a position of the vehicle on a slope, the longitudinal axis of the vehicle being positioned parallel to a slope so that the front wheels 6 are at a same level and the rear wheels 8 are at a same level, and
- lateral inclination terrain mode, executed when the lateral inclination information means 130 indicate a lateral inclination of the vehicle with respect to a horizontal plane.

In other words, when the vehicle is positioned parallel to the slope, the vehicle is strictly facing "uphill" or "downhill". When the vehicle has a lateral inclination, it is facing transversal to an "uphill" or "downhill" direction.

In the present embodiment, the terrain control means 134 include a sub-unit within the control unit 100 connected to the drive mode control means 112.

The control means 14 or the control unit 100 are adapted to and configured for controlling the lead as a function of the lateral inclination information.

Furthermore, the pressure control device 68 and/or the control unit 100 is adapted to and configured for adjusting the fluid pressure in at least one of the front air chambers 62 and/or rear air chambers 66, and in particular in each of these air chambers, as a function of the lateral inclination information. To this end, the control unit 100 is linked to the distribution valve 76 via the pressure control line 108.

The link control device 80 and/or the control unit 100 is adapted to control the position of the front wheels 6 and/or of the rear wheels 8 with respect to the vehicle frame 4 based on the information of the lateral inclination information means 130. In particular, when a lateral inclination is detected, the actuators 82 are locked in the same position, so that the nominal position of both front wheels is identical and both front wheels have a mechanical behavior with respect to the vehicle frame 4 as if linked by a rigid axle which is suspended to the vehicle frame 4.

The vehicle 2, in particular the control means 14, comprise a vegetation selector 140 adapted to and configured for switching the control means 14 into one of the following vegetation modes, indicating the vegetation type on which the vehicle is displaced:
Grassland mode - The terrain comprises one or more of the following: Grass land, standing plants, stubble, intermediate crops, and
Row crop mode - The terrain comprises row crops or the terrain comprises wheel tracks.

Based on the information of the vegetation selector 140 and the lateral inclination information means 130, the control means 14, in the present embodiment the control unit 100, are adapted and configured for controlling the vehicle according to one, several or all of the following drive strategies:
DRIVE STRATEGY 1: Vegetation mode=Grassland mode and Terrain mode= horizontal plane terrain mode: the vehicle is driven in neutral drive mode and a first, namely a relatively small, air chamber pressure is set, and preferably the air chamber pressure is set to be identical in each air chamber (The fluid pressure in the air chambers is for example smaller than 1,3 bars but higher than 1,1 bars or higher than 0,7 bars);
DRIVE STRATEGY 2: Vegetation mode=Grassland mode and Terrain mode=lateral inclination terrain mode: the vehicle is driven in small lead drive mode and the air chamber pressure is adjusted as a function of the lateral inclination so that a lower ground wheel has an air pressure higher than the corresponding higher ground wheel;
DRIVE STRATEGY 3: Vegetation mode=Row crop mode and Terrain mode= horizontal plane terrain mode: the vehicle is driven in neutral drive mode and the air pressure is adjusted as a function of a needed traction force; and
DRIVE STRATEGY 4: Vegetation selector= Row crop mode and Terrain mode= lateral inclination terrain mode: the vehicle is driven in high lead drive mode and the air chamber pressure is adjusted as a function of the lateral inclination so that a lower ground wheel has an air pressure higher than the corresponding higher ground wheel.

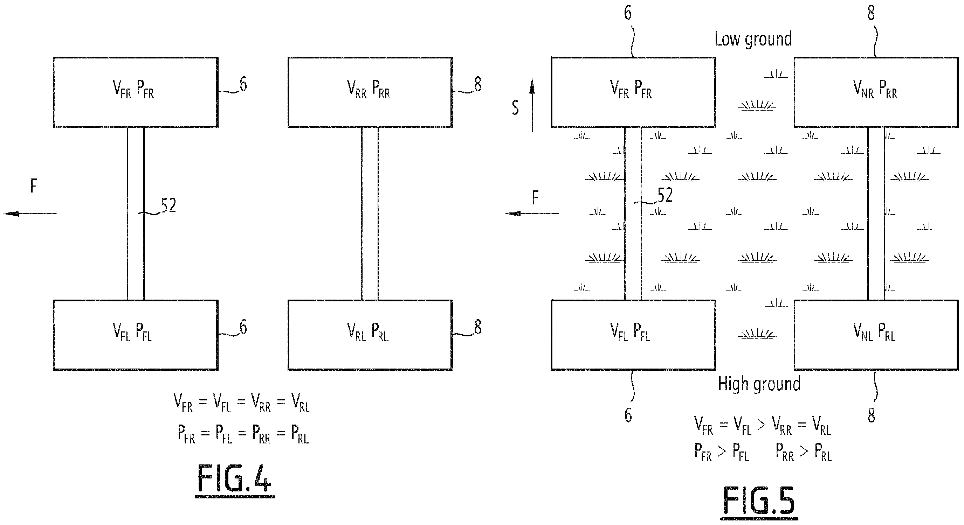

The principle of DRIVE STRATEGY 1 is indicated in Figure 4. The nominal speed of each wheel is indicated with "Vₓₓ" and the pressure in the air chamber by "Pₓₓ", the index xx is FR,FL,RR,RL which indicates the front right, front left, rear right and rear left tire respectively. The

The front drive direction is indicated by F and corresponds to the direction of the front FR of the vehicle. However the front drive direction may correspond to the direction of the rear of the vehicle in case of reverse drive.

In this drive strategy, the actuators 82 are set free, so that the front wheels 6 are suspended individually with respect to the vehicle frame 4..

The principle of DRIVE STRATEGY 2 is shown on Figure 5. The vehicle is driving on laterally inclined ground perpendicular to a slope S and the front right wheel 6 and the rear right wheel 8 are respectively lower than the front left wheel 6 and the rear left wheel 8. Consequently, the nominal speeds of the front wheels V_{FL} and V_{FR} are set identical and the nominal speeds of the rear wheels V_{RL} and V_{RR} are set identical, but the nominal speed of the front wheels is higher than the nominal speed of the rear wheels. In addition, the pressure in the air chambers of the lower ground wheels, in the present case the front right wheel and the rear right wheel is set higher than the pressure in the higher ground wheels, in the present case the front left wheel and the front rear wheel.

In this drive strategy, the actuators 82 are locked in the same position, so that the nominal position of both front wheels is identical and both front wheels have a mechanical behavior with respect to the vehicle frame 4 as if linked by a rigid axle which is suspended to the vehicle frame 4

In DRIVE STRATEGY 3, additionally to the vehicle being driven in neutral drive mode, similar to the situation in Figure 4. The air pressure is adjusted as a function of a needed traction force. In case a higher traction force is needed, the pressure in the air chambers 62, 66 is reduced for example by a value comprised between 0,1 to 0,5 bar, in case a lower traction force is needed, the pressure in the air chambers 62, 66 is increased, for example by a value comprised between 0,1 to 0,5 bar.

In this drive strategy, the actuators 82 are set to identical positions, so that the nominal position of all of the wheels with respect to the vehicle frame 4 is identical.

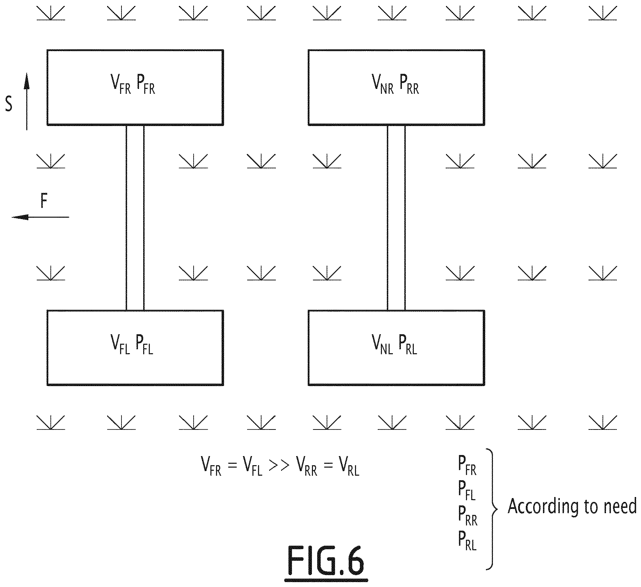

The principle of DRIVE STRATEGY 4 is shown on Figure 6. The vehicle is driving on laterally inclined ground perpendicular to a slope S and the front right wheel 6 and the rear right wheel 8 are respectively lower than the front left wheel 6 and the rear left wheel 8. Consequently, the nominal speeds of the front wheels V_{FL} and V_{FR} are set identical and the nominal speeds of the rear wheels V_{RL} and V_{RR} are set identical, but the nominal speed of the front wheels is higher than the nominal speed of the rear wheels and higher than the difference during DRIVE STRATEGY 2. In addition, the pressure in the air chambers of the lower ground wheels, in the present case the front right wheel and the rear right wheel is set higher than the pressure in the higher ground wheels, in the present case the front left wheel and the front rear wheel.

Additionally, in this drive strategy, the actuators 82 are locked in the same position, so that the nominal position of both front wheels is identical and both front wheels have a mechanical behavior with respect to the vehicle frame 4 as if linked by a rigid axle which is suspended to the vehicle frame 4.

The control means comprise supplemental drive strategy means 150 adapted to and configured for controlling the vehicle according to at least one supplementary drive strategy. The supplemental drive strategies comprise a supplemental drive strategy unit 152 of the control unit 100 and which is adapted to and configured for modifying the DRIVE STRATEGIES 1 to 4. The supplemental drive strategy unit 152 is inserted in the signal path of the control unit 100 from the drive mode control means 112 to the drive control line 102, the link control line 104, the main motor control line 106, and the pressure control line 108.

The vehicle 2, in particular the control means 14, comprise a supplementary drive strategy selector 154 adapted to and configured for switching the supplemental drive strategy unit 152 into one or more of the supplementary drive strategies, explained below.

The supplemental drive strategy means 150 is adapted to apply one, several or all of the following supplementary drive strategies, which are applicable in addition and preferably simultaneously with each of the DRIVE STRATEGIES 1 to 4:
DRIVE STRATEGY 5: - Turn mode: Supplementary to the selected drive strategy among the DRIVE STRATEGY 1 to 4: the lead is increased with respect to the applied DRIVE STRATEGY 1 to 4. Preferably, the lead is increased at least by 1% point increase, i.e. in case the lead is 1%, it is set to 2%. The remaining drive parameters of the applied DRIVE STRATEGY 1 to 4 are not altered.
DRIVE STRATEGY 6 - Reverse drive: With respect to the applied DRIVE STRATEGY 1 to 4, additionally the front nominal speed is applied to the rear wheels with a reverse rotation direction and the rear nominal speed is applied to the front nominal speed with a reverse direction. This drive strategy results in the vehicle driving backwards with the rear wheels being driven with the front nominal speed but with reversed direction and the front wheels being driven with the rear nominal speed but with reversed direction. The remaining drive parameters of the applied DRIVE STRATEGY 1 to 4 are not altered.
DRIVE STRATEGY 7 - Road travel: The neutral drive mode is set and the air chamber pressure is set to being higher than during the DRIVE STRATEGY 1 to 4, in particular the air chamber pressure is at least 0,1 bar and in particular 0,4 bar higher than during DRIVE STRATEGIES 1 to 4.

The supplemental drive strategy means 150 is also adapted to apply none of the supplementary drive strategies, thus leaving the DRIVE STRATEGIES 1 to 4 unamended. This is achieved by a neutral mode of the supplemental drive strategy means 150.

During use of the vehicle, the operation is as follows.

For treating an agricultural field via forward drive and straight travel, the operator selects via the vegetation selector 140 the vegetation type of the agricultural field to be treated (Grassland or row crop) and sets the supplementary strategy selector 154 to neutral or off. The vehicle 2 is then driven using one of the DRIVE STRATEGIES 1 to 4 along the field in an essentially straight line. Depending on the inclination detected by the sensor 130, the control means switch between the corresponding drive strategies with the terrain being "laterally inclined" or "horizontal". Thanks to the DRIVE STRATEGIES 1 to 4, depending on the need of the field to be treated, the vehicle 2 keeps in track, is stable and protects the crop on the field as well as the soil. The stress on the operator due to manual intervention in the control process of the vehicle is low.

When the vehicle is to be driven on streets, the driver indicates "street travel" to the vehicle by selecting the corresponding drive strategy on the supplementary drive strategy selector 154.

When the vehicle is to be driven at a turn at an end of row, the "turn" mode is selected, and the corresponding supplementary drive strategy executed.

Generally, the use of the vehicle includes executing at least one of the DRIVE STRATEGIES 1 to 4, as a function of the vegetation and of the terrain.

During use of the vehicle at least one, several or all of the following method steps are executed:
The vehicle is driven and, in particular during neutral drive mode, the wheels are driven so that the front nominal speed is set equal to the rear nominal speed

The vehicle is driven, and in particular during small lead drive mode, the wheels are drive so that the front nominal speed is higher than the rear nominal speed, in particular in a range from 0% to 3%

The vehicle is driven and, in particular during high lead drive mode, the wheels are driven so that the front nominal speed is higher than the rear nominal speed and the difference in front nominal speed to the rear nominal speed is higher than in the small lead drive mode, in particular the difference (lead) being in a range from from 2 to 5%.

Detecting the lateral inclination of the vehicle frame or of the soil on which the vehicle is placed with respect to a horizontal plane and controlling the front drive means and the rear drive means based on the lateral inclination detected, and controlling the lead as a function of the detected lateral inclination.

Selecting, based on the vegetation type on which the vehicle is displaced, one of the following vegetation modes:
Grassland mode, when the terrain comprises one or more of Grass land, standing plants, stubble, and intermediate crops, and
Row crop mode, when the terrain comprises row crops or the terrain comprises wheel tracks, and once the vegetation mode is selected, displacing the vehicle on the corresponding terrain.

Controlling the vehicle according to one, several or all of the following drive strategies:
DRIVE STRATEGY 1, when the Vegetation mode=Grassland mode and the Terrain mode= horizontal plane terrain mode, driving the vehicle is in neutral drive mode;
DRIVE STRATEGY 2, when the vegetation mode=Grassland mode and the terrain mode=lateral inclination terrain mode, driving the vehicle in small lead drive mode;
DRIVE STRATEGY 3: when the vegetation mode=Row crop mode and the terrain mode= horizontal plane terrain mode, driving the vehicle in neutral drive mode; and
DRIVE STRATEGY 4, when the vegetation selector= Row crop mode and the terrain mode=lateral inclination terrain mode, driving the vehicle in high lead drive mode.

Controlling the fluid pressure, in particular the air pressure, in at least one of the front and/or rear air chambers, and in particular in each of the air chambers.

In DRIVE STRATEGY 1 setting a first, namely a relatively small, air chamber pressure, and preferably setting the air chamber pressure to be identical in each air chamber. In DRIVE STRATEGY 2 adjusting the air chamber pressure as a function of the lateral inclination, so that a lower ground wheel has an air pressure higher than the corresponding higher ground wheel. In DRIVE STRATEGY 3 adjusting the air pressure as a function of a needed traction force. In DRIVE STRATEGY 4 adjusting the air chamber pressure as a function of the lateral inclination, so that a lower ground wheel has an air pressure higher than the corresponding higher ground wheel.

Controlling the vehicle according to one, several or all of the following supplementary strategies by applying them in addition and preferably simultaneously to each of the DRIVE STRATEGIES 1 to 4:
DRIVE STRATEGY 5 - Turn mode, supplementary to the selected drive strategy among DRIVE STRATEGY 1 to 4 increasing the lead is increased with respect to the applied DRIVE STRATEGY 1 to 4, in particular increasing the lead at least by 1% point increase and for example by at most 2% point increase.
DRIVE STRATEGY 6 - Reverse drive - with respect to the applied DRIVE STRATEGY 1 to 4 applying the front nominal speed to the rear wheels with a reverse rotation direction and applying the rear nominal speed to the front nominal speed with a reverse direction.
DRIVE STRATEGY 7 - Road travel setting the neutral drive mode and the air chamber pressure is set to being higher than during the corresponding DRIVE STRATEGY 1 to 4, in particular the air chamber pressure is at least 0,1 bar and in particular 0,4 bar higher than during DRIVE STRATEGIES 1 to 4.

Controlling the front drive means and the rear drive means so that the maximum difference between the front nominal speed and the rear nominal speed is greater than 1%, preferably greater or equal than 2% and more preferably between 2 and 4%.

Controlling the front drive means independently from the rear drive means, namely the front nominal speed can be set from zero to a maximum front nominal speed and the rear nominal speed can be set from zero to a maximum rear nominal speed independently from the front nominal speed.

The names of the drive strategies and the modes are chosen for illustration purposes only. The exact names for these modes could be different, as long as the associated function is achieved.

While in the above embodiment the different features of the specific embodiment have been disclosed together it should not be implied that these features are exclusively to be used together. In particular, the features related to the following aspects can be used independently from one another or can be omitted:
- The features related to the pressure control in the tires. The vehicle can be used with tires having no pressure control or with wheels having full rubber tires
- The features relating to the suspension of the wheels. The wheels may be suspended to the vehicle frame 4 or may not be suspended to it.
- The features relating to the specific drive arrangement with individual motors.

The vehicle may have front drive means and rear drive means that are dependent one from another. Likewise, the vehicle may have the one or more of the features relating of the front drive and rear drive means, but without or only with some of the remaining features relating to the drive control.

According to other aspects, the vehicle of the present invention may have one or more of the following features:
- The vehicle comprises an adjustable link adjustably linking the front wheels or the rear wheels to the vehicle frame, so that the position of the front wheels is adjustable with respect to the position of the rear wheels and with respect to the vehicle frame, in particular the adjustable link comprising a mobile axle or a single suspension.
- In the lateral inclination terrain mode the pressure control device is adapted to and configured for adjusting the fluid pressure in at least one of the front and/or rear air chambers, and in particular in each of the air chambers, as a function of the lateral inclination information.

The air chamber of the tires is a space receiving air or another fluid under pressure and can be formed by a tube or by the interior space of a tubeless tire. The tires can therefore be tube tires or tubeless tires.

## Claims

1. Vehicle comprising
- a vehicle frame (4),
- front wheels (6),
- rear wheels (8),
- front drive means (10) for driving the front wheels with a front nominal speed,
- rear drive means (12) for driving the rear wheels with a rear nominal speed, and
- control means (14) adapted and configured for selectively controlling the front drive means and the rear drive means so that
either the front nominal speed (V_{FR}, V_{FL}) is different from the rear nominal speed (V_{RR}, V_{RL}), in particular so that the front nominal speed is greater or smaller than the rear nominal speed,
or so that the front nominal speed is equal to the rear nominal speed,
the difference between the front nominal speed and the rear nominal speed being defined as "lead",
**characterized in that**
the vehicle comprises lateral inclination information means (130), in particular a lateral inclination sensor, adapted to and configured for indicating the lateral inclination of the vehicle frame or of the soil on which the vehicle is placed with respect to a horizontal plane, wherein
the lateral inclination information means is connected to the control means (14) and
wherein
the control means (14) are adapted to and configured for controlling the front drive means and the rear drive means according to one of the two following terrain modes:
- horizontal plane terrain mode, executed when the lateral inclination information means indicate a horizontal position of the vehicle or a position of the vehicle parallel to a slope , and
- lateral inclination terrain mode, executed when the lateral inclination information means indicate a lateral inclination of the vehicle with respect to a horizontal plane, and
wherein
the control means are adapted to and configured for controlling the lead as a function of the lateral inclination information.

2. Vehicle according claim 1, wherein the vehicle comprises drive mode control means (112) defining one or more of the following drive modes:
A) a neutral drive mode in which the front nominal speed is set equal to the rear nominal speed,
B) a small lead drive mode in which the front nominal speed is higher than the rear nominal speed , in particular in a range from 0% to 3%,
C) a high lead drive mode in which the front nominal speed is higher than the rear nominal speed and the difference in front nominal speed to the rear nominal speed is higher than in the small lead drive mode, in particular the difference being in a range from from 2 to 5%.

3. Vehicle according to claim 2, wherein
the control means (14) comprise a vegetation selector (140) adapted to and configured for switching the control means into one of the vegetation modes, indicating the vegetation type on which the vehicle is displaced:
Grassland mode - The terrain comprises one or more of the following: Grass land, standing plants, stubble, intermediate crops, and
Row crop mode - The terrain comprises row crops or the terrain comprises wheel tracks, and wherein
the control means (14) are adapted and configured for controlling the vehicle according to one, several or all of the following drive strategies:
DRIVE STRATEGY 1: Vegetation mode=Grassland mode and Terrain mode= horizontal plane terrain mode: the vehicle is driven in neutral drive mode;
DRIVE STRATEGY 2: Vegetation mode=Grassland mode and Terrain mode=lateral inclination terrain mode: the vehicle is driven in small lead drive mode;
DRIVE STRATEGY 3: Vegetation mode=Row crop mode and Terrain mode= horizontal plane terrain mode: the vehicle is driven in neutral drive mode; and
DRIVE STRATEGY 4: Vegetation selector= Row crop mode and Terrain mode= lateral inclination terrain mode: the vehicle is driven in high lead drive mode.

4. Vehicle according to anyone of the preceding claims, wherein
at least one of the front wheels, in particular each front wheel, comprises a front tire (60) having a front air chamber (62), and/or at least one of the rear wheels, in particular each rear wheel, comprises a rear tire (64) having a rear air chamber (66), and wherein
the vehicle comprises furthermore a pressure control device (68) adapted to and configured for controlling the fluid pressure, in particular air pressure, in at least one of the front and/or rear air chambers, and in particular in each of the air chambers.

5. Vehicle according to claims 3 and 4 taken together, wherein
in DRIVE STRATEGY 1 a first, namely a relatively small, air chamber pressure is set, and preferably the air chamber pressure is set to be identical in each air chamber;
in DRIVE STRATEGY 2 the air chamber pressure is adjusted as a function of the lateral inclination so that a lower ground wheel has an air pressure higher than the corresponding higher ground wheel;
in DRIVE STRATEGY 3 the air pressure is adjusted as a function of a needed traction force; and
in DRIVE STRATEGY 4 the air chamber pressure is adjusted as a function of the lateral inclination so that a lower ground wheel has an air pressure higher than the corresponding higher ground wheel.

6. Vehicle according to claim 4 or 5, wherein
the control means (14) are adapted and configured for controlling the vehicle according to one, several or all of the following supplementary strategies, which are applied in addition and preferably simultaneously to each of the DRIVE STRATEGIES 1 to 4:
DRIVE STRATEGY 5 - Turn mode: Supplementary to the selected drive strategy among DRIVE STRATEGY 1 to 4: the lead is increased with respect to the applied DRIVE STRATEGY 1 to 4, in particular the lead is increased at least by 1% point increase;
DRIVE STRATEGY 6 - Reverse drive: With respect to the applied DRIVE STRATEGY 1 to 4, additionally the front nominal speed is applied to the rear wheels with a reverse rotation direction and the rear nominal speed is applied to the front nominal speed with a reverse direction;
DRIVE STRATEGY 7 - Road travel: the neutral drive mode is set and the air chamber pressure is set to being higher than during the DRIVE STRATEGY 1 to 4, in particular the air chamber pressure is at least 0,1 bar and in particular 0,4 bar higher than during DRIVE STRATEGIES 1 to 4.

7. Vehicle according to any one of the preceding claims, wherein the control means (14) are adapted to control the front drive means and the rear drive means so that the maximum difference between the front nominal speed and the rear nominal speed is greater than 1%, preferably greater or equal than 2% and more preferably between 2 and 4%

8. Vehicle according to claim 7, wherein the control means (14) are adapted to control the front drive means independently from the rear drive means, namely the front nominal speed can be set from zero to a maximum front nominal speed and the rear nominal speed can be set from zero to a maximum rear nominal speed independently from the front nominal speed.

9. Vehicle according to any one of the preceding claims, wherein the front drive means comprise a front motor (30), in particular a hydraulic motor or an electric motor, adapted to drive the front wheels and wherein the rear drive means comprise a rear motor (32), in particular a hydraulic motor or an electric motor, adapted to drive the rear wheels.

10. Vehicle according to claim 10 wherein the vehicle (2) comprises a main motor (40), in particular a combustion engine, and transmission means (42) adapted to and configured for transmitting energy from the main motor to the front drive means and to the rear drive means, in particular the transmission means comprising a distribution transmission and more particularly a pump transfer gear.

11. Vehicle according to anyone of the preceding claims, wherein the vehicle comprises a distribution device (20) for distributing a substance to an agricultural field, in particular for distributing liquid and/or powder to an agricultural field and wherein
the distribution device comprises a tank (22) for containing the substance and a distribution unit (24) connected to the tank.

12. Vehicle according to anyone of the preceding claims wherein at least one of the tires, and in particular all the tires, is/are tire(s) having a nominal minimum pressure of equal or below 1,5 bar in particular equal to or below 1,3 bar and more preferably of: equal to or below 1,2 bar, 1,1 bar, 0,9 bar or 0,8 bar and/or
at least one of the tires, and in particular all the tires, having a fluid pressure in the air chamber of smaller than 1,3 bars but higher than 1,1 bars or higher than 0,7 bars.

13. Use of a vehicle **characterized in that** the vehicle is a vehicle according to anyone of the preceding claims.

14. Use of a vehicle according to claim 13, wherein the vehicle is a vehicle at least according to claim 4 and further comprising detecting the vegetation on which the vehicle is to be displaced, setting the vegetation mode for the vehicle according the vegetation and executing at least one of the DRIVE STRATEGIES 1 to 4, as a function of the vegetation and of the terrain.

## Patentansprüche

1. Fahrzeug, umfassend
- einen Fahrzeugrahmen (4),
- Vorderräder (6),
- Hinterräder (8),
- vordere Antriebsmittel (10), um die Vorderräder mit einer vorderen Nenndrehzahl anzutreiben,
- hintere Antriebsmittel (12), um die Hinterräder mit einer hinteren Nenndrehzahl anzutreiben, und
- Steuermittel (14), die ausgelegt und konfiguriert sind, um selektiv die vorderen Antriebsmittel und die hinteren Antriebsmittel zu steuern, so dass
entweder die vordere Nenndrehzahl (V_{FR}, V_{FL}) verschieden von der hinteren Nenndrehzahl (V_{RR}, V_{RL}) ist, insbesondere derart, dass die vordere Nenndrehzahl größer oder kleiner als die hintere Nenndrehzahl ist,
oder derart, dass die vordere Nenndrehzahl gleich wie die hintere Nenndrehzahl ist,
wobei die Differenz zwischen der vorderen Nenndrehzahl und der hinteren Nenndrehzahl als "Steigung" bezeichnet wird,
**dadurch gekennzeichnet, dass**
das Fahrzeug Seitenneigungs-Informationsmittel (130) umfasst, insbesondere einen Seitenneigungssensor, der ausgelegt und konfiguriert ist, um die Seitenneigung des Fahrzeugrahmens oder des Bodens, auf den das Fahrzeug gestellt ist, mit Bezug auf eine horizontale Ebene anzugeben, wobei
das Seitenneigungs-Informationsmittel mit dem Steuermittel (14) verbunden ist, und wobei
die Steuermittel (14) ausgelegt und konfiguriert sind, um die vorderen Antriebsmittel und die hinteren Antriebsmittel nach einem der zwei folgenden Geländemodi zu steuern:
- Horizontalebenen-Geländemodus, der ausgeführt wird, wenn die Seitenneigungs-Informationsmittel eine horizontale Position des Fahrzeugs oder eine Position des Fahrzeugs parallel zu einer Neigung angeben, und
- Seitenneigungs-Geländemodus, der ausgeführt wird, wenn die Seitenneigungs-Informationsmittel eine Seiteneigung des Fahrzeugs mit Bezug auf eine horizontale Ebene angeben, und wobei
- die Steuermittel ausgelegt und konfiguriert sind, um die Steigung als eine Funktion der Seitenneigungsinformation zu steuern.

2. Fahrzeug nach Anspruch 1, wobei das Fahrzeug Antriebsmodus-Steuermittel (112) umfasst, die einen oder mehrere der folgenden Antriebsmodi definieren:
A) einen neutralen Antriebsmodus, in dem die vordere Nenndrehzahl gleich wie die hintere Nenndrehzahl eingestellt ist,
B) einen niedrigen Steigungs-Antriebsmodus, in dem die vordere Nenndrehzahl höher als die hintere Drehzahl ist, insbesondere in einem Bereich von 0 % bis 3 %,
C) einen hohen Steigungs-Antriebsmodus, in dem die vordere Nenndrehzahl höher als die hintere Nenndrehzahl ist und die Differenz der vorderen Nenndrehzahl zur hinteren Nenndrehzahl höher als im niedrigen Steigungs-Antriebsmodus ist, wobei insbesondere die Differenz im Bereich von 2 bis 5 % liegt.

3. Fahrzeug nach Anspruch 2, wobei
die Steuermittel (14) einen Vegetationswähler (140) umfassen, der ausgelegt und konfiguriert ist, um das Steuermittel in einen der Vegetationsmodi zu schalten, der die Vegetationsart angibt, auf dem das Fahrzeug bewegt wird:
Weidelandmodus - Das Gelände umfasst eines oder mehrere der Folgenden: Weideland, stehende Pflanzen, Stoppel, Zwischenfrucht und
Reihenkulturmodus - das Gelände umfasst Reihenkultur, oder das Gelände umfasst Radspuren, und wobei
die Steuermittel (14) ausgelegt und konfiguriert sind, um das Fahrzeug gemäß einem, mehreren oder allen der folgenden Antriebsstrategien zu steuern:
ANTRIEBSSTRATEGIE 1: Vegetationsmudus = Weidelandmodus und Geländemodus = Horizontalebenen-Geländemodus: das Fahrzeug wird im neutralen Antriebsmodus angetrieben;
ANTRIEBSSTRATEGIE 2: Vegetationsmodus = Weidelandmodus und Geländemodus = Seitenneigungs-Geländemodus: das Fahrzeug wird im kleinen Steigungs-Antriebsmodus angetrieben;
ANTRIEBSSTRATEGIE 3: Vegetationsmudus = Reihenkulturmodus und Geländemodus = Horizontalebenen-Geländemodus: das Fahrzeug wird im neutralen Antriebsmodus angetrieben; und
ANTRIEBSSTRATEGIE 4: Vegetationswähler = Reihenkulturmodus und Geländemodus = Seitenneigungs-Geländemodus: das Fahrzeug wird im hohen Steigungs-Antriebsmodus angetrieben.

4. Fahrzeug nach einem der vorhergehenden Ansprüche, wobei
mindestens eines der Vorderräder, insbesondere jedes Vorderrad, einen Vorderreifen (60) mit einer vorderen Luftkammer (62) umfasst, und/oder mindestens eines der Hinterräder, insbesondere jedes Hinterrad, einen hinteren Reifen (64) mit einer hinteren Luftkammer (66) umfasst, und wobei
das Fahrzeug außerdem eine Drucksteuervorrichtung (68) umfasst, die ausgelegt und konfiguriert ist, um den Fluiddruck, insbesondere den Luftdruck in mindestens einer der vorderen und/oder hinteren Luftkammer und insbesondere in jeder der Luftkammern zu steuern.

5. Fahrzeug nach Anspruch 3 und 4 zusammen, wobei
in der ANTRIEBSSTRATEGIE 1 ein erster, insbesondere ein relativ kleiner Luftkammerdruck eingestellt ist und vorzugsweise der Luftkammerdruck eingestellt ist, um in jeder Luftkammer identisch zu sein;
in der ANTRIEBSSTRATEGIE 2 der Luftkammerdruck als eine Funktion der Seitenneigung angepasst ist, so dass ein unteres Bodenrad einen Luftdruck aufweist, der höher als das entsprechende höhere Bodenrad ist;
in der ANTRIEBSSTRATEGIE 3 der Luftdruck als eine Funktion einer erforderlichen Zugkraft angepasst ist; und
in der ANTRIEBSSTRATEGIE 4 der Luftkammerdruck als eine Funktion der Seitenneigung angepasst ist, so dass ein unteres Bodenrad einen Luftdruck aufweist, der höher als das entsprechende höhere Bodenrad ist.

6. Fahrzeug nach Anspruch 4 oder 5, wobei
die Steuermittel (14) ausgelegt und konfiguriert sind, um das Fahrzeug gemäß einem, mehreren oder allen der folgenden Antriebsstrategien zu steuern, die zusätzlich und vorzugsweise gleichzeitig mit jeder der ANTRIEBSSTRATEGIE 1 bis 4 angewendet werden:
ANTRIEBSSTRATEGIE 5 - Drehmodus: Zusätzlich zur ausgewählten Antriebsstrategie aus ANTIREBSSTRATEGIE 1 bis 4: die Steigung wird mit Bezug auf die angewendete ANTRIEBSSTRATEGIE 1 bis 4 erhöht, insbesondere wird sie Steigung mindestens um 1 Prozentpunkt erhöht;
ANTRIEBSSTRATEGIE 6 - Rückwärtsantrieb: Mit Bezug auf die angewendete ANTRIEBSSTRATEGIE 1 bis 4 wird zusätzlich die vordere Nenndrehzahl auf die Hinterräder mit einer Rückwärtsrotationsrichtung angewendet, und die hintere Nenndrehzahl wird auf die vordere Nenndrehzahl mit einer Rückwärtsrichtung angewendet;
ANTRIEBSSTRATEGIE 7 - Straßenfahrten: der neutrale Antriebsmodus wird eingestellt, und der Luftkammerdruck wird eingestellt, um höher als während der ANTRIEBSSTRATEGIE 1 bis 4 zu sein, insbesondere ist der Luftkammerdruck mindestens 0,1 bar und ist insbesondere 0,4 bar höher als während der ANTRIEBSSTRATEGIE 1 bis 4.

7. Fahrzeug nach einem der vorhergehenden Ansprüche, wobei die Steuermittel (14) ausgelegt sind, um die vorderen Antriebsmittel und die hinteren Antriebsmittel zu steuern, so dass die maximale Differenz zwischen der vorderen Nenndrehzahl und der hinteren Nenndrehzahl größer als 1 % ist, vorzugsweise größer als oder gleich wie 2 % und insbesondere zwischen 2 und 4 % liegt.

8. Fahrzeug nach Anspruch 7, wobei die Steuermittel (14) ausgelegt sind, um die vorderen Antriebsmittel unabhängig von den hinteren Antriebsmitteln zu steuern, d. h. die vordere Nenndrehzahl kann von null bis zu einer maximalen vorderen Nenndrehzahl eingestellt werden, und die hintere Nenndrehzahl kann von null bis zu einer maximalen hinteren Nenndrehzahl eingestellt werden, unabhängig von der vorderen Nenndrehzahl.

9. Fahrzeug nach einem der vorhergehenden Ansprüche, wobei die vorderen Antriebsmittel einen vorderen Motor (30) umfassen, insbesondere einen hydraulischen Motor oder einen elektrischen Motor, der ausgelegt ist, um die Vorderräder anzutreiben, und wobei die hinteren Antriebsmittel einen hinteren Motor (32) umfassen, insbesondere einen hydraulischen Motor oder einen elektrischen Motor, der ausgelegt ist, um die Hinterräder anzutreiben.

10. Fahrzeug nach Anspruch 10, wobei das Fahrzeug (2) einen Hauptmotor (40) umfasst, insbesondere einen Verbrennungsmotor, und Übertragungsmittel (42), die ausgelegt und konfiguriert sind, um Energie vom Hauptmotor an die vorderen Antriebsmittel und die hinteren Antriebsmittel zu übertragen, wobei insbesondere die Übertragungsmittel eine Verteilungsübertragung und und genauer ein Pumpenübertragungsgetriebe umfassen.

11. Fahrzeug nach einem der vorhergehenden Ansprüche, wobei das Fahrzeug eine Verteilungsvorrichtung (20) umfasst, um eine Substanz auf einem landwirtschaftlichen Feld zu verteilen, insbesondere um Flüssigkeit und/oder Pulver auf einem landwirtschaftlichen Feld zu übertragen, und wobei
die Verteilungsvorrichtung einen Tank (22) umfasst, um die Substanz zu enthalten, und eine Verteilungseinheit (24), die mit dem Tank verbunden ist.

12. Fahrzeug nach einem der vorhergehenden Ansprüche, wobei mindestens einer der Reifen und insbesondere alle Reifen Reifen mit einem minimalen Nenndruck sind, die gleich oder unter 1,5 bar sind, insbesondere gleich oder unter 1,3 bar und bevorzugter: gleich oder unter 1,2 bar, 1,1 bar, 0,9 bar oder 0,8 bar und/oder
mindestens einer der Reifen und insbesondere alle Reifen einen Fluiddruck in der Luftkammer aufweist/aufweisen, der kleiner als 1,3 bar jedoch höher als 1,1 bar und höher als 0,7 bar ist.

13. Verwendung eines Fahrzeugs, **dadurch gekennzeichnet, dass** das Fahrzeug ein Fahrzeug nach einem der vorhergehenden Ansprüche ist.

14. Verwendung eines Fahrzeugs nach Anspruch 13, wobei das Fahrzeug ein Fahrzeug mindestens nach Anspruch 4 ist, und weiter umfassend Nachweis der Vegetation, auf der das Fahrzeug bewegt werden soll, Einstellung des Vegegtationsmodus für das Fahrzeug je nach der Vegetation und Durchführen mindestens einer der ANTRIEBSSTRATEGIE 1 bis 4 als einer Funktion der Vegetation und des Geländes.

## Revendications

1. Véhicule comprenant :
- un châssis de véhicule (4),
- des roues avant (6),
- des roues arrière (8),
- des moyens d'entraînement avant (10) pour entraîner les roues avant avec une vitesse nominale avant,
- des moyens d'entraînement arrière (12) pour entraîner les roues arrière avec une vitesse nominale arrière, et
- des moyens de commande (14) conçus et configurés pour commander de manière sélective les moyens d'entraînement avant et les moyens d'entraînement arrière de sorte que
soit la vitesse nominale avant (V_{FR}, V_{FL}) soit différente de la vitesse nominale arrière (V_{RR}, V_{RL}), en particulier de sorte que la vitesse nominale avant soit supérieure ou inférieure à la vitesse nominale arrière,
soit de sorte que la vitesse nominale avant soit égale à la vitesse nominale arrière,
la différence entre la vitesse nominale avant et la vitesse nominale arrière étant définie en tant que « pas »,
**caractérisé en ce que**
le véhicule comprend des moyens d'informations d'inclinaison latérale (130), en particulier un capteur d'inclinaison latérale, conçus et configurés pour indiquer l'inclinaison latérale du châssis de véhicule ou du sol sur lequel le véhicule est placé par rapport à un plan horizontal, dans lequel
les moyens d'informations d'inclinaison latérale sont connectés aux moyens de commande (14), et dans lequel
les moyens de commande (14) sont conçus et configurés pour commander les moyens d'entraînement avant et les moyens d'entraînement arrière conformément à l'un des deux modes de terrain suivants :
- un mode de terrain plan horizontal, exécuté lorsque les moyens d'informations d'inclinaison latérale indiquent une position horizontale du véhicule ou une position du véhicule parallèle à une pente, et
- un mode de terrain à inclinaison latérale, exécuté lorsque les moyens d'informations d'inclinaison latérale indiquent une inclinaison latérale du véhicule par rapport à un plan horizontal, et dans lequel
les moyens de commande sont conçus et configurés pour commander le pas en fonction des informations d'inclinaison latérale.

2. Véhicule selon la revendication 1, dans lequel le véhicule comprend des moyens de commande de mode d'entraînement (112) définissant un ou plusieurs des modes d'entraînement suivants :
A) un mode d'entraînement neutre dans lequel la vitesse nominale avant est établie de manière à être égale à la vitesse nominale arrière,
B) un mode d'entraînement à petit pas dans lequel la vitesse nominale avant est supérieure à la vitesse nominale arrière, en particulier dans une plage de 0 % à 3 %,
C) un mode d'entraînement à grand pas dans lequel la vitesse nominale avant est supérieure à la vitesse nominale arrière et la différence entre la vitesse nominale avant et la vitesse nominale arrière est supérieure à celle dans le mode d'entraînement à petit pas, en particulier la différence étant dans une plage de 2 % à 5 %.

3. Véhicule selon la revendication 2, dans lequel
les moyens de commande (14) comprennent un sélecteur de végétation (140) conçu et configuré pour commuter les moyens de commande dans l'un des modes de végétation, indiquant le type de végétation sur lequel le véhicule se déplace :
Mode de prairie - le terrain comprend l'une ou plusieurs : de prairie, de plantes verticales, de chaume, de cultures intermédiaires, et
Mode de cultures en lignes - le terrain comprend des cultures en lignes ou le terrain comprend des voies de véhicule, et dans lequel
les moyens de commande (14) sont conçus et configurés pour commander le véhicule conformément à l'une, plusieurs ou la totalité des stratégies d'entraînement suivantes :
stratégie d'entraînement 1 : mode de végétation = mode de prairie et mode de terrain = mode de terrain plan horizontal : le véhicule est entraîné dans le mode d'entraînement neutre ;
stratégie d'entraînement 2 : mode de végétation = mode de prairie et mode de terrain = mode de terrain à inclinaison latérale : le véhicule est entraîné dans le mode d'entraînement à petit pas ;
stratégie d'entraînement 3 : mode de végétation = mode de cultures en lignes et mode de terrain = mode de terrain plan horizontal : le véhicule est entraîné dans le mode d'entraînement neutre ; et
stratégie d'entraînement 4 : sélecteur de végétation = mode de cultures en lignes et mode de terrain = mode de terrain à inclinaison latérale : le véhicule est entraîné dans le mode d'entraînement à grand pas.

4. Véhicule selon l'une quelconque des revendications précédentes, dans lequel
au moins l'une des roues avant, en particulier chaque roue avant, comprend un pneumatique avant (60) comportant une chambre à air avant (62), et/ou au moins l'une des roues arrière, en particulier chaque roue arrière, comprend un pneumatique arrière (64) comportant une chambre à air arrière (66), et dans lequel
le véhicule comprend en outre un dispositif de commande de pression (68) conçu et configuré pour commander la pression de fluide, en particulier la pression d'air, dans au moins l'une des chambres à air avant et/ou arrière, et en particulier dans chacune des chambres à air.

5. Véhicule selon les revendications 3 et 4 prises ensemble, dans lequel
dans la stratégie d'entraînement 1, une première, à savoir une pression de chambre à air relativement faible est établie, et de préférence la pression de chambre à air est établie de manière à être identique dans chacune des chambres à air ;
dans la stratégie d'entraînement 2, la pression de chambre à air est ajustée en fonction de l'inclinaison latérale de sorte qu'une roue sur le sol plus bas ait une pression d'air supérieure à celle de la roue sur le sol plus haut correspondante ;
dans la stratégie d'entraînement 3, la pression d'air est ajustée en fonction d'une force de traction nécessaire ; et
dans la stratégie d'entraînement 4, la pression de chambre à air est ajustée en fonction de l'inclinaison latérale de sorte qu'une roue sur le sol plus bas ait une pression d'air supérieure à celle de la roue sur le sol plus haut correspondante.

6. Véhicule selon la revendication 4 ou 5, dans lequel
les moyens de commande (14) sont conçus et configurés pour commander le véhicule conformément à l'une, plusieurs ou la totalité des stratégies supplémentaires suivantes, qui sont appliquées en plus et de préférence simultanément à chacune des stratégies d'entraînement 1 à 4 :
stratégie d'entraînement 5 - mode de virage : en plus de la stratégie d'entraînement sélectionnée parmi les stratégies d'entraînement 1 à 4 : le pas est augmenté par rapport à la stratégie d'entraînement 1 à 4 appliquée, en particulier le pas est augmenté au moins de 1 % point ;
stratégie d'entraînement 6 - entraînement en arrière : par rapport à la stratégie d'entraînement 1 à 4 appliquée, en plus, la vitesse nominale avant est appliquée aux roues arrière avec une direction de rotation inverse et la vitesse nominale arrière est appliquée à la vitesse nominale avant avec une direction inverse ;
stratégie d'entraînement 7 : déplacement sur route : le mode d'entraînement neutre est établi et la pression de chambre à air est établie de manière à être supérieure à celle pendant les stratégies d'entraînement 1 à 4, en particulier la pression de chambre à air est d'au moins 0,1 bar et en particulier plus élevée de 0,4 bar que celle pendant les stratégies d'entraînement 1 à 4.

7. Véhicule selon l'une quelconque des revendications précédentes, dans lequel les moyens de commande (14) sont conçus pour commander les moyens d'entraînement avant et les moyens d'entraînement arrière de sorte que la différence maximum entre la vitesse nominale avant et la vitesse nominale arrière soit supérieure à 1 %, de préférence supérieure ou égale à 2 % et plus préférablement entre 2 % et 4 %.

8. Véhicule selon la revendication 7, dans lequel les moyens de commande (14) sont conçus pour commander les moyens d'entraînement avant de manière indépendante des moyens d'entraînement arrière, à savoir la vitesse nominale avant peut être établie de zéro à une vitesse nominale avant maximum et la vitesse nominale arrière peut être établie de zéro à une vitesse nominale arrière maximum de manière indépendamment de la vitesse nominale avant.

9. Véhicule selon l'une quelconque des revendications précédentes, dans lequel les moyens d'entraînement avant comprennent un moteur avant (30), en particulier un moteur hydraulique ou un moteur électrique, conçu pour entraîner les roues avant, et dans lequel les moyens d'entraînement arrière comprennent un moteur arrière (32), en particulier un moteur hydraulique ou un moteur électrique, conçu pour entraîner les roues arrière.

10. Véhicule selon la revendication 10, dans lequel le véhicule (2) comprend un moteur principal (40), en particulier un moteur à combustion interne, et des moyens de transmission (42) conçus et configurés pour transmettre l'énergie du moteur principal aux moyens d'entraînement avant et aux moyens d'entraînement arrière, en particulier les moyens de transmission comprenant une transmission de distribution et plus particulièrement un pignon de transfert de pompe.

11. Véhicule selon l'une quelconque des revendications précédentes, dans lequel le véhicule comprend un dispositif de distribution (20) pour distribuer une substance à un champ agricole, en particulier pour distribuer un liquide et/ou une poudre à un champ agricole, et dans lequel
le dispositif de distribution comprend un réservoir (22) pour contenir la substance et une unité de distribution (24) reliée au réservoir.

12. Véhicule selon l'une quelconque des revendications précédentes, dans lequel au moins l'un des pneumatiques, et en particulier tous les pneumatiques, est/sont des pneumatiques ayant une pression minimum nominale inférieure ou égale à 1,5 bars, en particulier inférieure ou égale à 1,3 bars, et plus préférablement : inférieure ou égale à 1,2 bars, 1,1 bars, 0,9 bar ou 0,8 bar, et/ou
au moins l'un des pneumatiques, et en particulier tous les pneumatiques, a/ont une pression de fluide dans la chambre à air inférieure à 1,3 bars, mais supérieure à 1,1 bars ou supérieure à 0,7 bar.

13. Utilisation d'un véhicule **caractérisé en ce que** le véhicule est un véhicule selon l'une quelconque des revendications précédentes.

14. Utilisation d'un véhicule selon la revendication 13, dans laquelle le véhicule est un véhicule au moins selon la revendication 4 et comprenant en outre la détection de la végétation sur laquelle le véhicule doit être déplacé, l'établissement du mode de végétation pour le véhicule conformément à la végétation et l'exécution d'au moins l'une des stratégies d'entraînement 1 à 4, en fonction de la végétation et du terrain.
